# EUROPEAN PATENT SPECIFICATION

(11) **EP 3 398 441 B1**
(45) Date of publication and mention of the grant of the patent: **17.04.2024**
(21) Application number: 16881317.8
(22) Date of filing: 29.12.2016
(51) Int. Cl.: A23B 7/157, A23B 7/005

(54) **METHOD FOR THE OPTIMISATION OF ORGANOLEPTIC PROPERTIES IN VEGETABLE PRODUCTS CONTAINING CHLOROPHYLLOUS PIGMENTS**
VERFAHREN ZUR OPTIMIERUNG ORGANOLEPTISCHER EIGENSCHAFTEN IN PFLANZLICHEN PRODUKTEN MIT CHLOROPHYLLPIGMENTEN
PROCÉDÉ D'AMÉLIORATION DES PROPRIÉTÉS ORGANOLEPTIQUES DE PRODUITS VÉGÉTAUX CONTENANT DES PIGMENTS CHLOROPHYLLIENS

(30) Priority: 30.12.2015 ES 201531932
(43) Date of publication of application: 07.11.2018
(73) Proprietor: Consejo Superior de Investigaciones Científicas (CSIC), 28006 Madrid (ES)
(72) Inventor: GANDUL ROJAS, Beatriz, 41013 Sevilla (ES); VERGARA DOMÍNGUEZ, Honorio, 41013 Sevilla (ES); GALLARDO GUERRERO, Mª Lourdes, 41013 Sevilla (ES)
(74) Representative: Pons Ariño, Angel
(86) International application number: PCT/ES2016/070943
(87) International publication number: WO 2017/114994

(56) References cited:
- EP-A1- 0 314 298
- EP-A1- 0 314 298
- US-A- 4 473 591
- US-A- 4 701 330
- US-A- 5 114 725
- US-A- 6 004 601
- US-A1- 2005 276 888
- US-B1- 6 210 729
- BEATRIZ GANDUL-ROJAS ET AL: "Pigment changes during processing of green table olive specialities treated with alkali and without fermentation", FOOD RESEARCH INTERNATIONAL, vol. 65 part B, 11 May 2014 (2014-05-11), pages 224-230, XP055584346, AMSTERDAM, NL ISSN: 0963-9969, DOI: 10.1016/j.foodres.2014.05.007
- JOAQUÍN BAUTISTA-GALLEGO ET AL: "The effect of ZnCl 2 on green Spanish-style table olive packaging, a presentation style dependent behaviour", JOURNAL OF THE SCIENCE OF FOOD AND AGRICULTURE, vol. 95, no. 8, 2 September 2014 (2014-09-02), pages 1670-1677, XP055584631, GB ISSN: 0022-5142, DOI: 10.1002/jsfa.6870
- L. D. MABESA ET AL: "Non-volatile Organic Acid Profiles of Peas and Carrots Cooked by Microwaves", JOURNAL OF FOOD PROTECTION, vol. 42, no. 5, 1 May 1979 (1979-05-01), pages 385-388, XP055584438, US ISSN: 0362-028X, DOI: 10.4315/0362-028X-42.5.385
- Anonymous: "Citric Acid - from Wikipedia", , 29 December 2015 (2015-12-29), pages 1-9, XP055584443, Retrieved from the Internet: URL:https://en.wikipedia.org/w/index.php?t itle=Citric_acid&oldid=697332517 [retrieved on 2019-04-30]
- ZHENG YONGJU ET AL.: 'Effect of heat treatment, pH, sugar concentration, and metal ion Addition on green color retention in homogenized puree of Thompson seedless grape' MATERIAL AND METHODS vol. 55, no. 2, 2014, pages 595 - 603, XP028782769
- PATRICIA SCIPIONI GRISELDA ET AL.: 'The Effect of Mg2 , Cu2 and Zn2 Pre-treatment on the Color of Yerba Mate (Ilex paraguariensis) Leaves' BRAZILIAN ARCHIVES OF BIOLOGY AND TECHNOLOGY NOV-DEC vol. 53, no. 6, 31 October 2010, ISSN 1516-8913 pages 1497 - 1502, XP055396327

## Description

### SECTOR OF THE INVENTION

The present invention belongs to the sector of agri-food technology.

Specifically, it relates to a method that enables organoleptic properties, in particular colour, to be optimised in fruits and vegetables containing chlorophyll pigments. For this purpose, the method is based on known techniques, such as treatment with compounds containing Zn, improving the obtained results by means of a treatment with a buffer acid solution.

In this way, products can be produced having a permanent bright green colour, without exceeding the quantity of Zn that is legally permitted, while leaving other organoleptic characteristics, such as flavour, unaltered.

### STATE OF THE ART

Given the growing demand of select, high quality products, innovation in the sector of vegetable products containing chlorophyll pigments in general, and the table olive in particular, is aimed at traditional products with organoleptic characteristics that are highly valued by consumers, but with trade that is highly localised to date, due to the limited useful life thereof.

The olive is a drupe with a characteristic bitter flavour due to oleuropein glucoside. In the processing thereof as a table olive, the elimination of this bitter component is the fundamental step that enables a more appetising product to be produced. Based on the variety, the state of maturity and the type of fruit (whole or cut), this process is more or less intense, and therefore a wide range of production styles exist. Methods that use treatment with diluted alkaline solution to hydrolyse the oleuropein are the most common worldwide, like the Spanish-style green olives or the California-style oxidised black olives.

In Spanish or Seville-style olives, after alkaline hydrolysis of the bitter components, the fruits are placed in brine where they undergo a lactic acid fermentation process and acquire their appreciated organoleptic characteristics. Currently, however, other preparations called "specialties" of green olives that include alkaline treatment of the fruit but not a fermentation phase are gaining commercial importance. They have characteristics and specific names in the different producer countries: *Campo Real* in Spain, *Castelvetrano* in Italy, *Picholine* in France, and California-style green olives or green ripe olives in the United States. In addition to the mild and slightly alkaline flavour thereof, one of the most desirable and appreciated organoleptic characteristics of these products is a bright green colour that is as similar as possible to that of the fresh fruit, which the consumer tends to associate with a more natural or less processed product.

Unfortunately, during the preservation phase, the colour is significantly modified, obtaining a product with a colour that is very different from the "natural green" expected by the consumer/producer. In Spain, some studies aimed at implementing an industrial process for these types of specialities have been conducted (Brenes and Garcia. "Elaboración de aceitunas denominadas Green ripe olives con variedades españolas" [Production of olives called Green ripe olives with Spanish varieties]. Grasas Aceites (2005) 56, 188-19; Casado, Sánchez, Rejano and Montaño "Estudio de nuevos procedimientos de elaboración de aceitunas verdes tratadas con álcali, no fermentadas, conservadas mediante tratamientos térmicos [Study of new methods for producing green olives treated with alkali, non-fermented and preserved by means of heat treatment]". Grasas y Aceites (2007) 58, 275-282). All these olive preparations that do not include fermentation share a relatively high pH in the pulp that requires, according to the Quality Standards that regulate the trade of table olives [Codex Alimentarius Commission (FAO/WHO) (1981) Codex Standard for table olives (Codex Stan 66-1981). Revision 1987] the application of some heat treatment to ensure the long-term preservation thereof.

Unfortunately, all heat treatments for preservation that are necessary to ensure the safety of the product negatively modify the colour thereof, which evolves from bright green to yellower shades, similar to those produced during fermentation of the Spanish-style green olives, and eliminating the differences that are intended to be maintained between both commercial products.

The colour of the olive, like the colour of all green fruits and vegetables, is due to the presence of chlorophylls *a* and *b*, which are found in the chloroplasts linked to carotenoids. The striking colour change from bright green to olive-brown that generally occurs in the vegetable heating process is due to the release of cell acids during heating, which causes the substitution reaction of the central Mg ion of the chlorophyll molecule for 2H⁺, thereby modifying the characteristics of the chromophore group, with the resulting colour change:

### Type of Isocyclic Ring (Ring V)

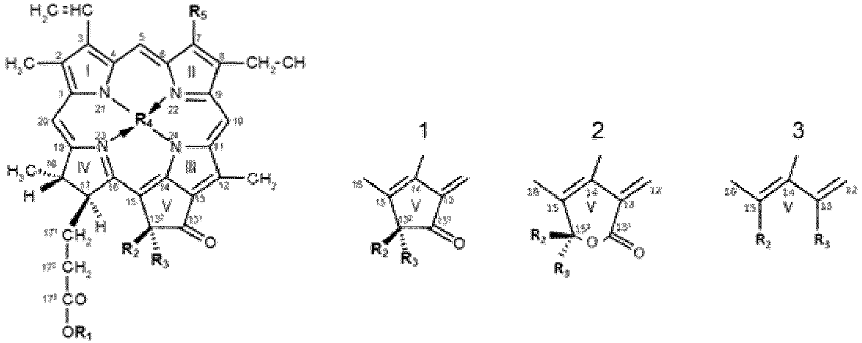

| **Number** | **Pigment** | **Ring V** | **R₁** | **R₂** | **R₃** | **R₄** | **R₅** |
|---|---|---|---|---|---|---|---|
| 1 | 15²-methyl-phytol-chlorin e₆ ester | 3 | Phytol | CH₂COOH | COOH | 2H | CH₃ |
| 2 | Zn-15²-methyl-phytol-chlorin e₆ ester | 2 | Phytol | CH₂COOH | CDOH | Zn | CH₃ |
| 3 | Chlorophyll *b* | 1 | Phytol | M | COOCH₃ | I-1g | CHO |
| 4 | Chlorophyll *a* | 1 | Phytol | H | COOCH₃ | I-1g | CH₃ |
| 5 | 15¹-OH-lactone-Pheophytin *a* | 2 | Phytol | OH | COOCH₃ | 2H | CH₃ |
| 6 | Zn Pheophytin *a* | 1 | Phytol | H | COOCH₃ | Zn | CH₃ |
| 7 | Zn Pheophytin *a*' | 1 | Phytol | COOCH₃ | H | Zn | CH₃ |
| 8 | Zn Pyropheophytin *a* | 1 | Phytol | H | H | Zn | CH₃ |
| 9 | Pheophytin *a* | 1 | Phytol | H | COOCH₃ | 2H | CH₃ |
| 10 | Pheophytin *a*' | 1 | Phytol | COOCH: | H | 2H | CH₃ |
| 11 | Pyropheophytin *a* | 1 | Phytol | H | H | 2H | CH₃ |

All processing systems to which green fruits and vegetables are subjected cause, to a greater or lesser extent, the formation of different Mg-free chlorophyll derivatives, mainly pheophytins, pyropheophytins and pheophorbides, all of which have a brown-grey colour.

The efforts of the food industry to preserve the green colour of heat-processed green vegetables by using alkalising agents, which decrease acidity, or high-temperature short-time heat treatments (HTST) have been known for a long time. These methods improve the colour in the short term, but they do not manage to retain the green colour during the storage time.

However, the methods that use the high binding affinity of some divalent metals, such as Cu (II) and Zn (II), with the porphyrin ring to form highly stable metal complexes and a bright green colour are successful.

Furthermore, studies conducted for industries of the table olive sector have demonstrated the significant presence of fat-soluble Cu (II) metal-chlorophyll complexes in commercial green table olives, with a striking bright green colour and labelled as "Olives in lye" and "Castelvetrano" style. It has been demonstrated that the formation of these complexes is the result of adding Cu (II) salts, a practice that is completely fraudulent since the positive list of food additives in the EU does not include any copper salt. However, some Zn (II) salts are permitted, such as zinc acetate (E-650).

In the case of table olives, although the use of the zinc acetate additive (E-650) is still not permitted, methods describing the usefulness thereof as an antimicrobial preservative (Spanish patent no. 2369183) have already been patented. The next documents of the state of the art also refer to methods for treating green olives. Beatriz Gandul Rojas et al., Food Research International, vol. 65, part B, 11 May 2014, 224-230, describe the pigment changes during processing of green table olive specialities treated with alkali and without fermentation and conclude that the high alkaline pH of the table olive processing is the main feature which will govern the subsequent transformation of the chlorophyll pigments initially present in the fresh fruit. During processing, the main transformations of pigments are due to oxidation reactions of chlorophylls *a* and *b*, which affected the isocyclic ring of the chlorophyll structure but not the Mg atom that remains, and does not change substantially the pigment colour and, consequently, the fruit colour. Joaquín Bautista Gallego et al., Journal of the Science of Food and Agriculture, vol. 95, no. 8, 2 September 2014, 1670-1677, refer to the effect of ZnCl₂ on green Spanish-style table olive packaging and disclose that zinc chloride is less efficient than potassium sorbate as a yeast inhibitor in green Spanish-style olives, showing clear presentation style dependent behaviour for this property. Its presence produces significant changes in chemical parameters but scarcely affects colour or sensory characteristics. Therefore, none of these documents describe a method that enables green colour to be optimised and maintained in green table olives.

Although in general the rate of the formation reaction of the Zn (II) metal-chlorophyll complexes is slower than that of the corresponding Cu (II) complexes, different useful methods that use these Zn salts for preserving the green colour in different processed vegetables have been patented:
- US 4473591
- US 5114725
- US 6004601
- US 6210729 B1
with the only limitation being that the Zn (II) content of the final product cannot exceed 0.075 g/kg (75 ppm) (limit established by the Food and Drug Administration). This limitation has prevented generalised use of this method, especially on those products with a medium-low content in chlorophyll pigments, as is the case of green fruits in general and the table olive in particular. The amount of Zn (II) needed to obtain an optimal green colour usually exceeds the established limits (US 5482727).

Therefore, it is of great interest for the food industry in general, and for the sector of table olives in particular, to optimise a method for obtaining a food with a permanent green colour, minimising the Zn (II) content of the final product.

### DESCRIPTION OF THE INVENTION

A first object of the present invention is a method for optimising the green colour in green table olives, wherein said method is as described in claim 1.
The zinc compound is a zinc salt selected from among zinc acetate, zinc bisglycinate, zinc chloride, zinc citrate, zinc gluconate, zinc lactate, zinc oxide, zinc carbonate, zinc sulphate or combinations thereof, and the treatment with the zinc salt consists of putting the vegetable products in contact with a solution of the zinc salt having a concentration comprised between 0.005 and 3 g/L, in a solid/liquid ratio equal to or greater than 1:1 (w/v), for a period of time comprised between 5 minutes and 1 year, and at a temperature between 15°C and 129°C.

The buffered base solution is selected from among a buffered solution of borate, tris(hydroxymethyl)aminomethane, glycine, phosphate, carbonate or combinations thereof, and the treatment with the buffered base solution consists of putting the vegetable products in contact with the solution having a concentration equal to or greater than 0.1M, in a solid/liquid ratio equal to or greater than 1:1 (w/v), for a period of time comprised between 5 minutes and 1 year, and at a temperature between 15°C and 129°C.

The buffered acid solution is selected from among acetic acid, ascorbic acid, benzoic acid, citric acid, lactic acid, malic acid, propionic acid, succinic acid or combinations thereof, and the treatment with the buffered acid solution consists of putting the vegetable products in contact with the solution having a concentration equal to or greater than 0.1M, in a solid/liquid ratio equal to or greater than 1:1 (w/v), for a period of time comprised between 1 minute and 10 days, and at a temperature between 15°C and 90°C.

The treatment with the buffered acid solution can take place before the treatment with the zinc salt or at the same time as the treatment with the zinc salt.

Alternatively, the treatment with the buffered base solution takes place at the same time as the treatment with the zinc salt.

The heat treatment for preservation is selected from among pasteurisation or sterilisation. Alternatively, the treatment with the buffered base solution, the treatment with the zinc salt and the heat treatment for sterilisation can take place at the same time.

The method can further include at least one of the following steps:
- washing of the vegetable products
- packing in brine

In a preferred embodiment, the vegetable products are green table olives processed by means of alkaline treatment and without fermentation.

Specifically, the green table olives processed by means of alkaline treatment and without fermentation are subjected to:
- treatment with buffered lactic acid/NaOH acid solution at a concentration equal to or greater than 0.1M and pH equal to or less than 5, and in a solid/liquid ratio equal to or greater than 1:1, and containing NaCl in a proportion between 3 and 6%, for a time between 1 minute and 10 days, and at a temperature between 15°C and 90°C.
- treatment with zinc acetate for a time comprised between 5 minutes and 1 year, and at a temperature between 15°C and 129°C, in a concentration between 0.05 g/L and 0.5 g/L, and in a solid/liquid ratio equal to or greater than 1:1 (w/v).
- treatment with buffered glycine/NaOH base solution, in a concentration equal to or greater than 0.1M and pH between 8 and 10, in a solid/liquid ratio equal to or greater than 1:1 (w/v) and for a period of time comprised between 5 minutes and 1 year, and at a temperature between 15°C and 129°C.
- washing of the green olives with water for a time between 3 and 24h, and with a number of washes between 0 and 5, based on the concentration of zinc used in an earlier treatment.
- packing in NaCl brine in a concentration between 3 and 6%.
- heat treatment that is selected from among sterilisation for 15 F₀, at a temperature between 117°C and 129°C and a time between 5 and 43 minutes, or pasteurisation at 80°C, for a time between 6 and 14 minutes.

In an especially preferred embodiment of the process on green table olives processed by means of alkaline treatment and without fermentation:
- the treatment with the buffered lactic acid/NaOH acid solution takes place at a pH equal to 4 in a solid/liquid ratio of 1:3 (w/v), containing NaCl at 4% (w/v) for 9 days and at a temperature of 30°C.
- the treatment with zinc acetate is carried out at a concentration of 0.1 g/L and simultaneous to the treatment with the buffered base solution, which takes place at a pH equal to 9.5, includes NaCl at 4% and maintains a period of equilibrium of 48h at a temperature of 30°C, followed by 43 minutes of sterilisation at 117°C.

Another object of the present disclosure (not within the scope of the present invention) is green table olives processed by means of alkaline treatment and without fermentation and prepared by means of the method explained. The olives thus prepared simultaneously have a percentage of Zn-chlorophyll complexes comprised between 15% and 75% and less than 0.0075% of Zn.

### DESCRIPTION OF THE FIGURES

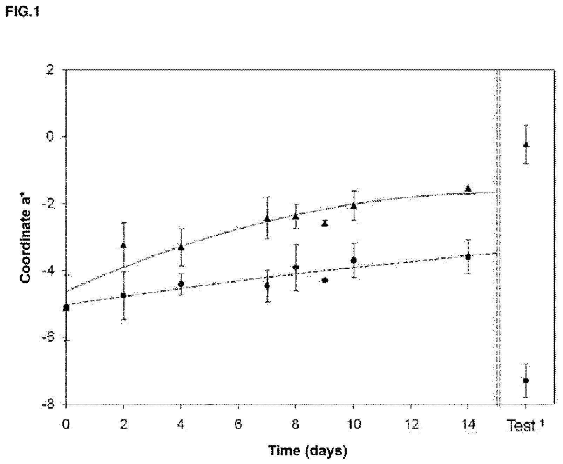

**Figure 1****:** Effect of the treatment with zinc acetate at pH 5 on the green colour of the table olive, estimated based on the parameter a*. The Zn²⁺ ions are added in a concentration of 3 g/L (3000 ppm) in a 0.1M acetic acid/acetate buffer solution, at pH 5 and containing 6% of NaCl (w/v). ● with Zn²⁺ ▲ control without Zn²⁺. Note: *Accelerated storage test,* consisting of subjecting the treated olives at a temperature of 55°C for 24 hours.

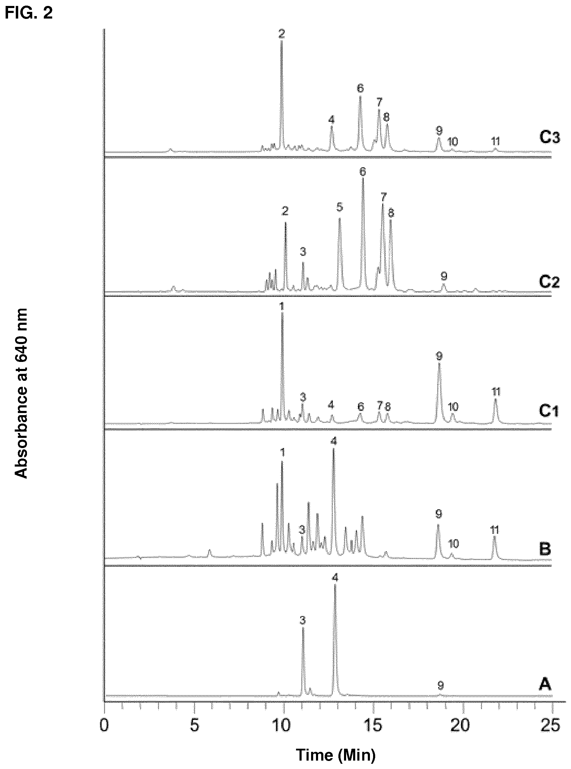

**Figure 2****:** Typical reversed-phase HPLC chromatograms with detection at 640 nm, for separating chlorophylls, Mg-free chlorophyll derivatives and zinc metal-chlorophyll complexes in olives of the Manzanilla variety, according to the different phases of the Castelvetrano-style production process (CSP) and embodiment of the invention according to example no. 1: **(A)** Fresh fruit; **(B)** CSP fruit; **(C)** CSP fruit subsequently treated with 3 g/L (3000 ppm) of Zn+² ions dissolved in NaCl brine at 4% (w/v), buffered at pH 5 with 0.1 M of acetic acid/acetate: (**C₁**) for 14 days, (**C₂**) for 6 months, (**C₃**) for 10 days + accelerated storage test (24h at 55°C). Identification of peaks: **Chlorophylls: 3.** Chlorophyll *b*; **4.** Chlorophyll a; **Precursors of the zinc metal-chlorophyll complexes of the series *a*: 1.** 15² methyl-phytol-chlorin e₆ ester; **9.** Pheophytin *a*; **10.** Pheophytin a'; **11.** Pyropheophytin a. **Zinc metal-chlorophyll complexes of the series *a*: 2.** Zn-15² methyl-phytol-chlorin e₆ ester; **5.** Zn-15¹-OH-Lactone Pheophytin *a*; **6.** Zn-Pheophytin *a*; **7.** Zn-Pheophytin *a*'; **8.** Zn-Pyropheophytin a.

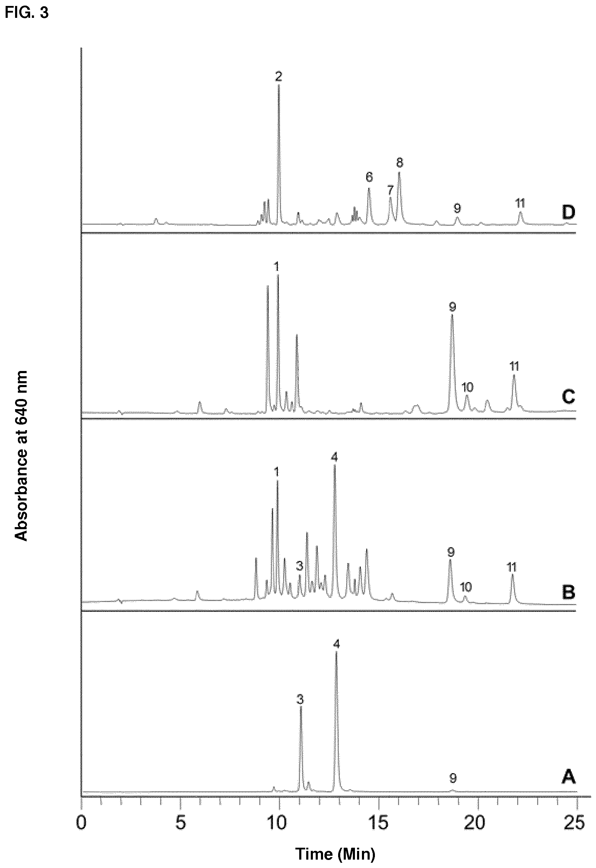

**Figure 3****:** Typical reversed-phase HPLC chromatograms with detection at 640 nm, for separating chlorophylls, Mg-free chlorophyll derivatives and zinc metal-chlorophyll complexes in olives of the Manzanilla variety, according to the different phases of the Castelvetrano-style production process (CSP) and embodiment of the invention according to example no. 4: **(A)** Fresh fruit; **(B)** CSP fruit; **(C)** CSP fruit after 9 days of acid treatment in NaCl brine at 4% (w/v), buffered at pH 4 with 0.1 M of lactic acid/NaOH (CSP+Ac); **(D)** CSP+Ac and sterilised at 117°C for 43 minutes, in a solution at 4% of NaCl (w/v) and 0.1M of glycine/NaOH at pH 9.5, containing 0.1 g/L (100 ppm) of Zn+² ions.

### DETAILED DESCRIPTION OF THE INVENTION

The present invention relates to methods for improving the green colour of green table olives, using a food grade salt zinc, without the amount of Zn (II) incorporated into the product exceeding the legally established limits (0.075 g/kg; 75 ppm). Although the method can be applied to any product that contains chlorophyll pigments (chlorophylls and/or chlorophyll derivatives), the product is, in particular, the green table olive processed by means of alkaline treatment and without fermentation, and the food additive is zinc acetate (E-650).

The invention encompasses any production phase of the table olive when zinc salts are used therein to improve the colour, and it aims to improve the colour of the product by forming zinc metal-chlorophyll complexes (Zn-Cls) with a bright green colour and high stability. The method can comprise the following steps:
A) treatment with a buffered acid solution
B) treatment with at least one zinc salt
C) treatment with a buffered base solution
D) washes
E) packing in brine
F) heat treatment for preservation

The re-greening of the product is attributed to the formation of zinc metal-chlorophyll complexes, mainly Zn-pheophytin a, Zn-pyropheophytin a and Zn-15²-Methyl-phytol-chlorin e₆ ester.

In the present invention, the term "**chlorophyll pigment**" refers to a coloured compound with a chemical structure derived from chlorophyll, in other words, formed by a porphyrin ring substituted with an additional isocyclic ring, which can be open, and a propionic acid moiety esterified or not with a terpene chain called phytol. The porphyrin ring is a tetrapyrrole, with four pyrrole rings linked to form a larger ring that is the porphyrin. In the case of chlorophyll, a Mg²⁺ atom, bonded to the nitrogens of the pyrrole groups, is located in the centre of the porphyrin, but this Mg⁺² atom can be substituted by Zn²⁺, Cu²⁺ or 2H⁺ to form other chemically stable pigments.

The term "**green table olive**" refers to a product that is prepared using healthy fruits of cultivated olive varieties, harvested during the ripening period, prior to colouring, when they have reached their normal size, and they are subjected to treatments to eliminate the natural bitterness preserved by means of natural fermentation or heat treatment, with or without preservatives, and packed with covering liquid. Examples of green table olives are green olives treated in brine, untreated green olives, or olive specialties processed by means of alkaline treatment and without fermentation, which have characteristics and specific names in the different producer countries: *Campo Real* in Spain, *Castelvetrano* in Italy, *Picholine* in France, and California-style green olives or green ripe olives in the United States.

In the present invention, the term "**treatment with a buffered acid solution**" (**step A**) refers to the immersion of the vegetable material in a buffer solution at acid pH for a certain period of time. According to a preferred embodiment, the buffer is lactic acid/NaOH at a concentration of 0.1M and pH ≤ 5, preferably 4, containing NaCl in a proportion between 3 and 6%, preferably 4% (w/v), and in a solid/liquid ratio equal to or greater than 1:1 and preferably 1:3 (w/v). The treatment time is between 1 minute and 30 days, preferably 9 days, at a temperature between 15°C and 90°C, preferably a controlled temperature of 30°C.

In the present invention, the term **"treatment with a zinc salt"** (**step B**) refers to the immersion of the vegetable material for a period of time in a buffer solution containing NaCl and a zinc salt. The zinc salt is a food grade watersoluble salt, preferably the zinc acetate food additive (E-650), and in a concentration between 0.005 g/L (5 ppm) and 3 g/L (3000 ppm), preferably 100 ppm and in a solid/liquid ratio equal to or greater than 1:1 (w/v). The treatment time is between 1 minute and 1 year, preferably 72h and the temperature is between 15°C and 129°C.

In the present invention, the term "**treatment with a buffered base solution**" (**step C**) refers to the immersion of the vegetable material for a period of time in a buffer solution at alkaline pH for a certain period of time. According to a preferred embodiment, the buffer is glycine/NaOH, in a concentration ≥ 0.1M and pH between 8 and 10, preferably 9.5. The proportion of NaCl can be between 3 and 6%, preferably 4% (w/v) and in a solid/liquid ratio ≥ 1:1 and preferably 1:1 (w/v). The treatment time is between 5 minutes and 1 year, preferably 72h, at a temperature between 15°C and 129°C.

The addition of the zinc salt (**step B**) can be carried out in the buffered acid solution (**step A**) or in the buffered base solution (**step C**) irrespectively.

In the present invention, the term "**washes**" (**step D**) refers to successive treatments of the vegetable material with water for a period of time. In a preferred embodiment, the treatment is carried out through immersion of the fruit in water for a period of time between 3 and 24h, preferably 12h and the number of washes is between 0 and 5, based on the concentration of zinc used in an earlier step.

In the present invention, the term "**packing in treating brine**" (**step E**) refers to the immersion of the vegetable material in NaCl brine in a concentration between 3 and 6%, preferably 4% (w/v). If the concentration of the zinc acetate additive in step **B** is ≤ 0.1 g/L (100 ppm), the steps of washes (**step D**) and packing in treating brine (**step E**) are eliminated from the method.

In the present invention, the term "**heat treatment for preservation**" refers to a heat treatment that ensures the long-term safety of the product. In a preferred embodiment, the heat treatment is sterilisation for 15 F₀, at a temperature between 117°C and 129°C, preferably at 117°C for a period of time of 43 minutes. In another preferred embodiment, the treatment is pasteurisation at 80°C, for a time between 6 and 14 minutes, preferably 6 min.

To analyse chlorophyll pigments, a specific extraction technique that has been developed by Minguez-Mosquera and Garrido-Fernández (Chlorophyll and carotenoid presence in olive fruit, Olea europaea. J. Agric. Food Chem. (1989) 37, 1-7) is required. The technique is based on the selective distribution of components between N,N-Dimethylformamide (DMF) and hexane. In the hexane phase, the lipids, the fraction of carotenes and diesterified xanthophylls remain, while the DMF phase retains the chlorophyll compounds and free and monoesterified xanthophylls. This system provides a solution for pigments that is free of the fatty material that is characteristic of these fruits and that interferes in the subsequent separation and identification of the pigments.

Once the purified extract of pigments is obtained, the separation and quantification of pigments is carried out by means of HPLC with a reversed-phase column (20 × 0.46 cm) packed with Mediterranea-Sea C18 (3 µm) (Teknokroma, Barcelona, Spain). The column is protected with a precolumn (1 × 0.4 cm) packed with the same material. The separation is carried out at a flow rate of 1.25 mL/min, by means of a gradient elution system that uses two solvent mixtures: A.- Water/ion suppression reagent/methanol (1:1:8 v/v/v) and B.- methanol/acetone (1:1 v/v). The ion suppression reagent is 0.05 M tetrabutylammonium acetate and 1 M ammonium acetate in water (Mínguez-Mosquera MI, Gandul-Rojas B, Montaño-Asquerino A, Garrido-Fernández J. "Determination of chlorophylls and carotenoids by HPLC during olive lactic fermentation". J. Chromatogr. (1991) 585, 259-266). The gradient system used is an adaptation of the system described by Gandul-Rojas, Roca and Gallardo-Guerrero 2012 ("Detection of the colour adulteration of green table olive with copper chlorophyllin complexes (E-141ii colorant)". LWT - Food Sci. Tech. (2012) 463, 11-318).

The spectrophotometric detection of the chlorophyll pigments is carried out at 666, 650, 640 and 626 nm and an online record of the UV-Vis absorption spectrum is obtained with a photodiode detector. The identification is made by co-chromatography with the corresponding standards and based on the spectral characteristics described in detail in specific publications (Gandul-Rojas et al. 2012). The quantification is carried out based on the corresponding calibration lines (amount vs integrated peak area). The calibration equations are obtained by means of least squares linear regression analysis in a concentration range according to the concentration levels of these pigments in table olives. Duplicate analyses of 5 different volumes of each standard solution are carried out.

To determine the content in zinc, 100 g of fruits that are washed, dried, pitted and chopped are used. Exactly 5 g of the resulting paste is weighed in a porcelain capsule and is placed in a muffle furnace. The temperature of the muffle is quickly brought to 100°C and then it is slowly increased until it reaches the calcination temperature (550°C), temperature at which it is maintained for 8-10 hours. The ashes, having a white-grey colour, are slightly moistened and they dissolve into three 2 mL portions of HCl 6 N, and it is slowly filtered through a paper filter into a 25 mL volumetric flask. Afterwards, the filter is cleaned three times with 3 mL of deionised water, which is also added to the volumetric flask, and it is finished by diluting to the mark with deionised water. The solution of the ashes is facilitated by slightly heating the capsule after each addition of HCl. At the same time, a blank test is prepared that only includes reagents (López A, Garcia P y Garrido A. "Multivariate characterization of table olives according to their mineral nutrient composition". Food Chem. (2008) 106:369-378). Finally, the zinc content is determined with an atomic absorption spectrophotometer (GBC, model 932), spraying the sample on an air-acetylene flame and using a zinc hollow cathode lamp. The absorbency is measured at 213.9 nm with a slit of 0.5 nm (Hornero-Méndez D, Gallardo-Guerrero L, Jarén-Galán M and Mínguez-Mosquera MI. "Differences in the activity of superoxide dismutase, polyphenol oxidase and Cu-Zn content in the fruits of Gordal and Manzanilla olive varieties". Z. Naturforsch. (2002) 57, 113-120).

The colour measurement is obtained with a BYK-Gardner spectrophotometer, Model 9000, equipped with software for calculating the chromaticity coordinates on the CIE L* a* b* scale. The data for each measurement will be the average value obtained with 20 olives (Arroyo-López FN, Romero C, Durán-Quintana MC, López-López A, Garcia-Garcia P and Garrido-Fernández A. "Kinetic study of the physicochemical and microbiological changes in seasoned olives during the shelf-life period". J. Agric. Food Chem. (2005) 53, 5285-5292). The changes in the green colour are expressed with the parameters L*, a*, b*, the ratio -a*/b, hue (h) and chrome (C*) (Koca N, Karadeniz F, Burdurlu HS. "Effect of pH on chlorophyll degradation and colour loss in blanched green peas". Food Chem. (2006) 100, 609-615).

### EMBODIMENT OF THE INVENTION

The invention is illustrated below by means of tests carried out by the inventors which reveal the effectiveness of the method described in the present invention.

**Raw material.** A 78 kg batch of olive fruits of the Manzanilla variety, mostly harvested in the yellowish-green state of maturity, was processed at laboratory scale as green table olives treated with alkali and without fermentation, according to the "Castelvetrano style". Prior to the processing, a manual selection of the fruit was carried out, eliminating those that were damaged or in different states of maturity (olives changing colour from green to purple, purple olives and black olives). These selected fruits were deposited in 3.7 L PET containers and were covered with NaOH solution at 2% (w/v) (2.2 kg of fruit + 1.8 L of alkaline solution). After one hour of treatment, 100 g of NaCl was added to each container (equivalent to a final concentration of 5.5% in the NaCl/NaOH solution) and the fruits were maintained in this alkaline brine for 15 days, after which three washes with water were carried out for 3.5h, 18h and 3.5 h. Finally, the fruits were placed in NaCl brine at 6% (w/v) and they were preserved in a cooled chamber at 4°C until the use thereof.

### Example no. 1: Pasteurised product prepared in three steps

### a) Steps A and B: treatment with zinc salt in a buffered acid solution.

Treatment of green table olives prepared in the Castelvetrano style in a 0.1 M solution of the acetic acid/acetate buffer mixture at pH 5, containing 6% (w/v) of NaCl, and 3 g/L (3000 ppm) of Zn²⁺ ions as zinc acetate. The solid/liquid ratio is 1:3 and the treatment lasts 6 months at a room temperature of 25 ± 3°C.
445 mL glass jars (16 RefTO77) were filled with 20 olives (99-103g) and 300 mL of the buffered brine containing 3 g/L (3000 ppm) of zinc acetate. The closed jars were kept in the laboratory at room temperature and in darkness, and they were analysed for colour and content in chlorophyll pigments at 2, 4, 7, 8, 9, 10 and 14 days. Finally, the fruits were stored for 6 months and alternatively, they were subjected to an accelerated storage test by means of heating in an oven at 55°C for 24h. At the same time, controls on packed fruits stored in identical conditions but without the addition of Zn²⁺ to the packing brine were carried out.

During storage, the loss of the green colour of the fruits, measured from the chromaticity coordinate a*, was very slow in the fruits packed with zinc, without this loss being significant in any case (p<0.05) (**Figure 1**). However, the fruits not treated with zinc lost their green colour more quickly, which began to be significant as of day 9 (p<0.05). This loss of green colour was associated with the substitution reaction of Mg²⁺ for 2H⁺, which the chlorophylls and derivatives underwent under acid conditions. However, in the fruits treated with the Zn²⁺ salt, this reaction was offset by the insertion of this divalent metal in the porphyrin ring, causing the formation of metal-chlorophyll complexes of a stable green colour. On day 8, the formation of these zinc metal-chlorophyll complexes, the concentration of which slowly increased up to day 14, began to be detected in the series "a" (**Figure 2**). The accelerated storage test led to very significant re-greening of the fruit treated with zinc, the value of a* even exceeding the initial value (-7.30).

This improvement in the colour was associated with the formation of different zinc metal-chlorophyll complexes, mostly in the series "a" (**Figure 2**). Quantitively, the zinc metal-chlorophyll complexes are approximately 45% of the total chlorophyll pigments present in the olives subjected to the accelerated storage test (**Table 1**):

**Table 1: Chromaticity coordinate a* and content in chlorophyll pigments (%) and zinc (ppm) in green table olives of the Manzanilla variety, prepared in the Castelvetrano style and embodiment of the invention according to different examples**

| SAMPLE | | | | | | | | | | | |
|---|---|---|---|---|---|---|---|---|---|---|---|
| | | | | | | | a* | Chlorophyll pigment (%) | | | Zinc (ppm) |
| | | | | | | | | with Mg | with 2H* | with Zn²⁺ | |
| Fresh fruit | | | | | | | -12.52±0.01 | 97.612.1 | 2.4±0.8 | - | 3.10±0.25 |
| Initial Castelvetrano | | | | | | | -5.87±0.51 | 50.1+4.4 | 49.9+4.4 | - | Nd¹⁾ |
| Castelvetrano 6 months at 4°C | | | | | | | -2.68±0.42 | 29.7±15.5 | 70.3+15.5 | - | Nd |

| **STEPS OF THE INVENTION** ²⁾ | | | | | | | | | | | |
|---|---|---|---|---|---|---|---|---|---|---|---|
| | A | B | C | D | E | F | | | | | |
| **Example 1**:3 steps and pasteurisation (accelerated storage test) | pH 5 and 3000 ppm (1:3) | | NO | 5 | YES | P | -7.30±0.51 | 20.5±1.1 | 34.6±0.1 | 44.9±1.2 | Nd |
| | pH 5 conrol without Zn (1:3) | | | | | | -0.22i0.57 | 18.5±0.5 | 81.5±0.5 | - | |
| **Example 2:** 4 steps and pasteurisation | pH 4 | **pH 9.5 (1:3) and Zn²⁺** | | 5 | YES | P | -1.53±0.25 | 0.4±0.3 | 22.0±2.0 | 74.4±1.4 | 503.2±34.2 |
| | | 3000 ppm | | | | | | | | | |
| | (1:3) | | | NO | YES | P | | | | | |
| **Example 3:** 3 steps and pasteurisation | pH 4 (1:3) | **pH 9.5 (1:1) and Zn²⁺** | | | | | | Nd | Nd | Nd | Nd |
| 3.1 | | 80 ppm | | | | | 0.25±0.32 | | | | |
| 3.2 | | 100 ppm | | | | | 0.30±0.27 | | | | |
| 3.3 | | 120 ppm | | | | | -0.35±0.41 | | | | |
| 3.4 | | 140 ppm | | | | | -0.33±0.28 | | | | |
| 3.5 | | Control without Zn²⁺ | | | | | 3.93±0.13 | | | | |
| **Example 4:** 2 steps and sterilisation | pH 4 (1:3) | **pH 9.5 (1:1) and Zn²⁺** | | NO | NO | E | | | | | |
| 4.1 | | 80 ppm | | | | | -4.28±0.39 | 4.7±0.1 | 45.3±3.6 | 48.9±4.6 | 58.8±6.9 |
| 4.2 | | 100 ppm | | | | | -4.61±0.58 | 5.311.7 | 51.8+0.3 | 42.9±2.0 | 68.5±3.2 |
| 4.3 | | 120 ppm | | | | | -4.71±0.71 | 5.3±0.4 | 44.4+0.9 | 50.310.5 | 86.2±5.1 |
| 4.4 | | 140 ppm | | | | | -5.00+0.39 | 3.110.1 | 50.3±1.1 | 54.6±1.2 | 70.4±5.6 |
| **Example 5**: 2 steps and sterilisation | | | (1:1) | | | | | | | | |
| pH 9.5 | **pH 4 (1:1) and Zn²⁺** | | pH 9.5 | NO | NO | E | -3.26±1 .53 | 20.1±1.2 | 55.7+2.6 | 23.3+0.9 | 34.9±1.1 |
| pH 9 | 100 ppm | | pH 9 | | | | -2.54±1.5 1 | 20.4+1.4 | 63.1+2.4 | 15.3±1.0 | 37.8±5.9 |
| **Note:** 1) Nd: not determined; 2) A: treatment with buffered acid solution; B: treatment with zinc salt; C: treatment with buffered base solution; D: washes; E: packed in brine; F: heat treatment for conservation; P: pasteurization for 6 min at 80°C: S: Sterilisation for 43 min at 117°C. | | | | | | | | | | | |

The results demonstrate that the tested storage conditions can be used to maintain the desired green colour of the olives prepared in the Castelvetrano style and that this improvement of the colour will be intensified as the storage time under these conditions passes. After 6 months of real storage at room temperature, the product has significant improvement in the apparent colour and can be washed, packed and pasteurised for the sale thereof.
**b) Step D: washes.** Immersion of the olives in tap water for 60h, with a change of water every 12h (5 washes).
**c) Steps E and F: packing in treating brine and heat treatment for preservation.** Filling of 370 mL glass bottles with approximately 156 g of fruits and 180 mL of a 0.1 M lactic acid/lactate buffer mixture at pH 4 and containing 4% (w/v) of NaCl at a temperature of 70°C and pasteurisation at 80°C for 6 minutes.

The formed zinc metal-chlorophyll complexes, responsible for the improvement of the green colour, are stable and are maintained after heat treatment for pasteurisation. In the product that has remained in treatment for 6 months, the value of the coordinate a* indicated a stabilisation of the green colour (0.27), and also presented a high percentage of zinc metal-chlorophyll complexes (71.63%). However, the long duration of the treatment and the high concentration of zinc salt led to the development of brown patches on the product, thereby making it unacceptable.

### Example no. 2: Pasteurised product prepared in four steps

**1) Step A** : **treatment with buffered acid solution:** Treatment of green table olives prepared in the Castelvetrano style in a lactic acid/NaOH buffer solution at a concentration of 0.1 M and pH 4, containing NaCl at 4% (w/v), and in a solid/liquid ratio of 1:3 for 9 days, at a room temperature of 25 ± 3°C.
**2) Steps B and C: treatment with zinc salt in a buffered base solution.** Immersion of the fruits in a 0.1 M glycine/NaOH buffer mixture at pH 9.5, containing NaCl at 4% (w/v) and the zinc acetate food additive, in a concentration of 3 g/L (3000 ppm) and in a solid/liquid ratio of 1:3, for 6 days, at a room temperature of 25 ± 3°C.
**3) Step D: washes.** Immersion of the olives in tap water for 60 h, with a change of water every 12 h (5 washes).
**4) Steps E and F: packing in treating brine and heat treatment for preservation.**

Filling of 370 mL glass bottles with approximately 156 g of fruits and 180 mL of a 0.1 M acetic acid/acetate buffer mixture at pH 4.3 and containing 4% (w/v) of NaCl at a temperature of 70°C and pasteurisation at 80°C for 8 min.

With this second example, a first optimisation of the treatment conditions is carried out. It has been demonstrated that the optimal pH for forming the metal--chlorophyll complexes depends on the type of chlorophyll substrate. In the case of chlorophylls and derivatives that contain Mg²⁺, the complexing reaction is quicker at acid pH, since these conditions favour the exchange of Mg²⁺ for 2H⁺ and of 2H⁺ for Zn²⁺. However, there are bibliographic references that demonstrate that in heat-treated vegetables, where all chlorophyll derivatives are of the pheophytin type (free of Mg²⁺), the formation of the complexes with Zn²⁺ is intensified at alkaline pH. In this example, steps A and B are carried out separately at different pH values, with the aim of reducing the time of treatment with zinc salt. The fruit is subjected to a first acid treatment at pH 4 to cause the pheophytinisation of the chlorophyll substrates (**Figure 3**), followed by a second treatment with buffered base brine at pH 9.5, in the presence of 3 g/L (3000 ppm) of Zn²⁺ ions. In only 6 days of treatment with the zinc salt, the formation of 74.37% of zinc complexes (**Figure 3** **and Table 1**) and a resulting stabilisation of the green colour, measured based on the parameter a*, with a value of -1.53, is achieved. The fruits are subjected to 5 washes to reduce the content in zinc and finally they are packed in acid brine and pasteurised. The complexes formed are stable to the heat treatment and the green colour remains stable, but the zinc content of the product was 0.5 g/kg (503.22 ppm), exceeding the legally established limits.

### Example no. 3: Pasteurised product prepared in three steps

**1. Step A: treatment with buffered acid solution.** Treatment of green table olives prepared in the Castelvetrano style in a lactic acid/NaOH buffer solution at a concentration of 0.1 M and pH 4, containing NaCl at 4% (w/v), and in a solid/liquid ratio of 1:3 for 9 days, at room temperature of 25 ± 3°C.
**2. Steps B and C: treatment with zinc salt in a buffered base solution.** Immersion of the fruits in a 0.1 M glycine/NaOH buffer mixture at pH 9.5, containing NaCl at 4% (w/v) and the zinc acetate food additive in concentrations of 0.08 g/L, 0.1g/L, 0.12 g/L, and 0.14 g/L (80, 100, 120, and 140 ppm) and in a solid/liquid ratio of 1:1, for 48 h at room temperature.
**3. Steps E and F: packing in treating brine and heat treatment for preservation.** Filling of 370 mL glass bottles with approximately 156 g of fruits and 180 mL of a 0.1 M lactic acid/NaOH buffer mixture at pH 4.3 and containing 6% (w/v) of NaCl at a temperature of 70°C and pasteurisation at 80°C for 6 minutes.
   In this third example, the amount of the zinc salt used is reduced, which enables the washing step to be eliminated; however, it does not achieve proper stabilisation of the green colour, the values of a* being maintained between 0.30 and -0.35 based on the amount of added zinc (**Table 1**).

### Example no. 4: Sterilised product prepared in two phases

### 1) Step A: treatment with buffered acid solution.

Treatment of green table olives prepared in the Castelvetrano style in a lactic acid/NaOH buffer solution at a concentration of 0.1 M and pH 4, containing NaCl at 6% (w/v), and in a solid/liquid ratio of 1:3 for 9 days, at a room temperature of 25 ± 3°C.

### 2) Steps B, C, E and F: packing in treating brine at buffered base pH, addition of zinc salt and heat treatment for sterilisation.

Filling of 370 mL glass bottles with approximately 156 g of fruits and 180 mL of the 0.1 M glycine/NaOH buffer mixture at pH 9.5, containing 4% (w/v) of NaCl and the zinc acetate food additive in concentrations of 0.08 g/L, 0.1g/L, 0.12 g/L, and 0.14 g/L (80, 100, 120, and 140 ppm) and in a solid/liquid ratio of 1:1, leaving a headspace of at least 2 mL. After 48h in equilibrium, a heating treatment for technical sterilisation is carried out for at least 15 F₀ (43 minutes at 117°C).

In this fourth example, an additional optimisation is carried out combining steps B, C and E with a heat treatment for sterilisation. Therefore, the amount of the additive used is reduced to ≤ 0.14 g/L (140 ppm), the washes are eliminated, and the total preparation time of the product is reduced. After the treatment step with acid buffer at pH 4 for 9 days, which causes a percentage of pheophytinisation in the chlorophyll substrates of at least 95% (**Figure 3**), the fruits are packed in a buffer mixture at pH 9.5, containing different amounts of zinc and they are subjected to heat treatment for sterilisation at 15 F₀. Immediately after the heat treatment, the formation of a high percentage of zinc complexes (>43%) and a stabilisation of the green colour (a* between -4.28 and -5.00) is already achieved (**Figure 3** **and Table 1**)**.** Although all the treatments achieve the desired improvement/stabilisation of the green colour, only the treatments with 0.08 g/L and 0.1 g/L (80 and 100 ppm) of zinc acetate maintain an amount of zinc in the finished product that is less than the legally permitted amount of 0.075 g/L (75 ppm) (**Table 1**)**.** The product would be ready for the sale thereof in 10 days and unlike the products of this type of preparation of heat-treated olives currently available on the market, the colour can continue to favourably evolve during the storage of the product at room temperature.

### Example no. 5: Sterilised product prepared in two phases

**1) Steps A and B: treatment with zinc salt in a buffered acid solution.** Treatment of green table olives prepared in the Castelvetrano style in a lactic acid/NaOH buffer solution at a concentration of 0.1M and pH 4, containing NaCl at 4% (w/v) and 0.1 g/L (100 ppm) of the zinc acetate food additive. The solid/liquid ratio is 1:1 and the treatment lasts 9 days at a room temperature of 25 ± 3°C.
**2) Steps C, E and F: packing in treating brine at buffered base pH and heat treatment for sterilisation.**
Filling of 370 mL glass bottles with approximately 156 g of fruits and 180 mL of the 0.1 M glycine/NaOH buffer mixture at pHs 9 and 9.5, containing 4% (w/v) of NaCl, in a solid/liquid ratio of 1:1, leaving a headspace of at least 2 mL. After 48h in equilibrium, a heating treatment for technical sterilisation is carried out for at least 15 F₀ (43 minutes at 117°C).

In this fifth example, an additional optimisation is carried out combining steps A and B (treatment in buffered acid solution and treatment with zinc salt). Thus, the amount of zinc that is incorporated in the product is further reduced to < 40 ppm (**Table 1**), forming an amount of zinc metal-chlorophyll complexes that is less than that of the previous example (between 15 and 23%) but enough to stabilise the green colour, with a value of a* between -2.54 and -3.26. In this case, by adding zinc in the step of the acid treatment, the degree of pheophytinisation of the chlorophyll pigments was lower, maintaining 20% of the native complexes with magnesium after the heat treatment.

## Claims

1. A method for optimising the green colour in green table olives which comprises:
- treatment of the green table olives with at least one zinc salt selected from among zinc acetate, zinc bisglycinate, zinc chloride, zinc citrate, zinc gluconate, zinc lactate, zinc oxide, zinc carbonate, zinc sulphate or combinations thereof;
- treatment of the green table olives from the previous step with a buffered base solution selected from among a buffered solution of borate, tris(hydroxymethyl)aminomethane, glycine, phosphate or carbonate or combinations thereof; and
- heat treatment for preservation,
wherein:
- the green table olives are subjected to a treatment with a buffered acid solution selected from among acetic acid, ascorbic acid, benzoic acid, citric acid, lactic acid, malic acid, propionic acid, succinic acid or combinations thereof that takes place before the treatment with the buffered base solution,
- the treatment with the buffered acid solution consists of putting the green table olives in contact with the solution having a concentration equal to or greater than 0.1M, in a solid/liquid ratio equal to or greater than 1:1 (w/v), for a period of time comprised between 1 minute and 10 days, and at a temperature between 15°C and 90°C,
- the treatment with the zinc salt consists of putting the green table olives in contact with a solution of the zinc salt having a concentration comprised between 0.005 and 3 g/L, in a solid/liquid ratio equal to or greater than 1:1 (w/v), for a period of time comprised between 5 minutes and 1 year, and at a temperature between 15°C and 129°C,
- the treatment with the buffered base solution consists of putting the green table olives in contact with the solution having a concentration equal to or greater than 0.1M, in a solid/liquid ratio equal to or greater than 1:1 (w/v), for a period of time comprised between 5 minutes and 1 year, and at a temperature between 15°C and 129°C, and
- the heat treatment for preservation is sterilisation for 15 F₀, at a temperature between 117°C and 129°C or the heat treatment for preservation is pasteurisation at 80°C, for a time between 6 and 14 minutes.

2. The method according to claim 1, wherein the treatment with the buffered acid solution takes place before the treatment with the zinc salt.

3. The method according to claim 1, wherein the treatment with the buffered acid solution takes place at the same time as the treatment with the zinc salt.

4. The method according to any one of claims 1 to 3, wherein the treatment with the buffered base solution takes place at the same time as the treatment with the zinc salt.

5. The method according to claim 4, wherein the treatment with the buffered base solution takes place at the same time as the treatment with the zinc salt and at the same time as a heat treatment for sterilisation.

6. The method according to any one of claims 1 to 5, which further includes at least one of the following steps:
- washing of the green table olives;
- packing in brine.

7. The method according to claim 1, wherein the green table olives are processed by means of alkaline treatment and without fermentation.

8. The method according to any one of claims 1 to 7, wherein the green table olives processed by means of alkaline treatment and without fermentation are subjected to:
- treatment with buffered lactic acid/NaOH acid solution at a concentration equal to or greater than 0.1M and pH equal to or less than 5, and in a solid/liquid ratio equal to or greater than 1:1, and containing NaCl in a proportion between 3 and 6%, for a period of time between 1 minute and 10 days, and at a temperature between 15°C and 90°C;
- treatment with zinc acetate for a period of time comprised between 5 minutes and 1 year, and at a temperature between 15°C and 129°C, in a concentration between 0.05 g/L and 0.5 g/L, and in a solid/liquid ratio equal to or greater than 1:1 (w/v);
- treatment with buffered glycine/NaOH base solution, in a concentration equal to or greater than 0.1M and pH between 8 and 10, in a solid/liquid ratio equal to or greater than 1:1 (w/v) and for a period of time comprised between 5 minutes and 1 year, and at a temperature between 15°C and 129°C;
- washing of the green olives with water for a period of time between 3 and 24h, and with a number of washes between 0 and 5, based on the concentration of zinc used in an earlier treatment;
- packing in NaCl brine in a concentration between 3 and 6%; and
- heat treatment that is selected from among sterilisation for 15 F₀, at a temperature between 117°C and 129°C and a time between 5 and 43 minutes, or pasteurisation at 80°C, for a time between 6 and 14 minutes.

9. The method according to claim 8, wherein:
- the treatment with the buffered lactic acid/NaOH acid solution takes place at a pH equal to 4 in a solid/liquid ratio of 1:3 (w/v), containing NaCl at 4% (w/v) for 9 days and at a temperature of 30°C; and
- the treatment with zinc acetate is carried out at a concentration of 0.1 g/L and simultaneous to the treatment with the buffered base solution, which takes place at a pH equal to 9.5, includes NaCl at 4% and maintains a period of equilibrium of 48h at a temperature of 30°C, followed by 43 minutes of sterilisation at 117°C.

## Patentansprüche

1. Verfahren zur Optimierung der grünen Farbe in grünen Tafeloliven, das Folgendes umfasst:
- Behandlung der grünen Tafeloliven mit mindestens einem Zinksalz, ausgewählt aus Zinkacetat, Zinkbisglycinat, Zinkchlorid, Zinkcitrat, Zinkgluconat, Zinklactat, Zinkoxid, Zinkcarbonat, Zinksulfat oder Kombinationen davon;
- Behandlung der grünen Tafeloliven aus dem vorherigen Schritt mit einer gepufferten basischen Lösung, ausgewählt aus einer gepufferten Lösung von Borat, Tris(hydroxymethyl)aminomethan, Glycin, Phosphat oder Carbonat oder Kombinationen davon; und
- Wärmebehandlung zur Konservierung,
wobei:
- die grünen Tafeloliven einer Behandlung mit einer gepufferten sauren Lösung, ausgewählt aus Essigsäure, Ascorbinsäure, Benzoesäure, Zitronensäure, Milchsäure, Äpfelsäure, Propionsäure, Bernsteinsäure oder Kombinationen davon, unterzogen werden, die vor der Behandlung mit der gepufferten basischen Lösung erfolgt,
- die Behandlung mit der gepufferten sauren Lösung darin besteht, die grünen Tafeloliven mit der Lösung, die eine Konzentration von gleich oder größer als 0,1 M aufweist, in einem Feststoff-Flüssigkeits-Verhältnis von gleich oder größer als 1:1 (Gew./Vol.) für einen Zeitraum zwischen 1 Minute und 10 Tagen und bei einer Temperatur zwischen 15 °C und 90 °C in Kontakt zu bringen,
- die Behandlung mit dem Zinksalz darin besteht, die grünen Tafeloliven mit einer Lösung des Zinksalzes, die eine Konzentration zwischen 0,005 und 3 g/l aufweist, in einem Feststoff-Flüssigkeits-Verhältnis von gleich oder größer als 1:1 (Gew./Vol.) für einen Zeitraum zwischen 5 Minuten und 1 Jahr und bei einer Temperatur zwischen 15 °C und 129 °C in Kontakt zu bringen,
- die Behandlung mit der gepufferten basischen Lösung darin besteht, die grünen Tafeloliven mit der Lösung, die eine Konzentration von gleich oder größer als 0,1 M aufweist, in einem Feststoff-Flüssigkeits-Verhältnis von gleich oder größer als 1:1 (Gew./Vol.) für einen Zeitraum zwischen 5 Minuten und 1 Jahr und bei einer Temperatur zwischen 15 °C und 129 °C in Kontakt zu bringen, und
- die Wärmebehandlung zur Konservierung eine Sterilisation für 15 Fa bei einer Temperatur zwischen 117 °C und 129 °C ist oder die Wärmebehandlung zur Konservierung eine Pasteurisierung bei 80 °C für eine Zeit zwischen 6 und 14 Minuten ist.

2. Verfahren gemäß Anspruch 1, wobei die Behandlung mit der gepufferten sauren Lösung vor der Behandlung mit dem Zinksalz erfolgt.

3. Verfahren gemäß Anspruch 1, wobei die Behandlung mit der gepufferten sauren Lösung gleichzeitig mit der Behandlung mit dem Zinksalz erfolgt.

4. Verfahren gemäß einem der Ansprüche 1 bis 3, wobei die Behandlung mit der gepufferten basischen Lösung gleichzeitig mit der Behandlung mit dem Zinksalz erfolgt.

5. Verfahren gemäß Anspruch 4, wobei die Behandlung mit der gepufferten basischen Lösung gleichzeitig mit der Behandlung mit dem Zinksalz und gleichzeitig mit einer Wärmebehandlung zur Sterilisation erfolgt.

6. Verfahren gemäß einem der Ansprüche 1 bis 5, das ferner mindestens einen der folgenden Schritte beinhaltet:
- Waschen der grünen Tafeloliven;
- Einlegen in Lake.

7. Verfahren gemäß Anspruch 1, wobei die grünen Tafeloliven mittels alkalischer Behandlung und ohne Fermentation verarbeitet werden.

8. Verfahren gemäß einem der Ansprüche 1 bis 7, wobei die mittels alkalischer Behandlung und ohne Fermentation verarbeiteten grünen Tafeloliven Folgendem unterzogen werden:
- Behandlung mit einer gepufferten sauren Lösung von Milchsäure/NaOH in einer Konzentration von gleich oder größer als 0,1 M und mit einem pH-Wert von gleich oder kleiner als 5 und in einem Feststoff-Flüssigkeits-Verhältnis von gleich oder größer als 1:1 und NaCl in einem Anteil zwischen 3 und 6 % enthaltend für einen Zeitraum zwischen 1 Minute und 10 Tagen und bei einer Temperatur zwischen 15 °C und 90 °C;
- Behandlung mit Zinkacetat für einen Zeitraum zwischen 5 Minuten und 1 Jahr und bei einer Temperatur zwischen 15 °C und 129 °C in einer Konzentration zwischen 0,05 g/l und 0,5 g/l und in einem Feststoff-Flüssigkeits-Verhältnis von gleich oder größer als 1:1 (Gew./Vol.);
- Behandlung mit einer gepufferten basischen Lösung von Glycin/NaOH in einer Konzentration von gleich oder größer als 0,1 M und mit einem pH-Wert zwischen 8 und 10 in einem Feststoff-Flüssigkeits-Verhältnis von gleich oder größer als 1:1 (Gew./Vol.) und für einen Zeitraum zwischen 5 Minuten und 1 Jahr und bei einer Temperatur zwischen 15 °C und 129 °C;
- Waschen der grünen Oliven mit Wasser für einen Zeitraum zwischen 3 und 24 Stunden und mit einer Anzahl von Waschgängen zwischen 0 und 5, basierend auf der bei einer früheren Behandlung verwendeten Zinkkonzentration;
- Einlegen in NaCl-Lake in einer Konzentration zwischen 3 und 6 %; und
- Wärmebehandlung, die aus Sterilisation für 15 F₀ bei einer Temperatur zwischen 117 °C und 129 °C und für eine Zeit zwischen 5 und 43 Minuten oder Pasteurisierung bei 80 °C für eine Zeit zwischen 6 und 14 Minuten ausgewählt ist.

9. Verfahren gemäß Anspruch 8, wobei:
- die Behandlung mit der gepufferten sauren Lösung von Milchsäure/NaOH bei einem pH-Wert von 4 in einem Feststoff-Flüssigkeits-Verhältnis von 1:3 (Gew./Vol.), enthaltend NaCl 4 % (Gew./Vol.), für 9 Tage und bei einer Temperatur von 30 °C erfolgt; und
- die Behandlung mit Zinkacetat in einer Konzentration von 0,1 g/l und gleichzeitig mit der Behandlung mit der gepufferten basischen Lösung erfolgt, die bei einem pH-Wert von 9,5 stattfindet, NaCl 4 % enthält und einen Gleichgewichtszeitraum von 48 Stunden bei einer Temperatur von 30 °C aufrecht erhält, gefolgt von 43 Minuten Sterilisation bei 117 °C.

## Revendications

1. Procédé d'optimisation de la couleur verte d'olives de table vertes, qui comprend :
- le traitement des olives de table vertes avec au moins un sel de zinc choisi parmi l'acétate de zinc, le bisglycinate de zinc, le chlorure de zinc, le citrate de zinc, le gluconate de zinc, le lactate de zinc, l'oxyde de zinc, le carbonate de zinc, le sulfate de zinc ou des combinaisons de ceux-ci ;
- le traitement des olives de table vertes provenant de l'étape précédente avec une solution de base tamponnée choisie parmi une solution tamponnée de borate, de tris(hydroxyméthyl)aminométhane, de glycine, de phosphate ou de carbonate ou de combinaisons de ceux-ci ; et
- un traitement thermique de conservation,
dans lequel :
- les olives de table vertes sont soumises à un traitement avec une solution d'acide tamponnée choisie parmi l'acide acétique, l'acide ascorbique, l'acide benzoïque, l'acide citrique, l'acide lactique, l'acide malique, l'acide propionique, l'acide succinique ou des combinaisons de ceux-ci qui a lieu avant le traitement avec la solution de base tamponnée,
- le traitement avec la solution d'acide tamponnée consiste à mettre les olives de table vertes en contact avec la solution ayant une concentration supérieure ou égale à 0,1 M, en un rapport solide/liquide supérieur ou égal à 1:1 (p/v), pendant un laps de temps compris entre 1 minute et 10 jours et à une température entre 15 °C et 90 °C,
- le traitement avec le sel de zinc consiste à mettre les olives de table vertes en contact avec une solution du sel de zinc ayant une concentration comprise entre 0,005 et 3 g/l, en un rapport solide/liquide supérieur ou égal à 1:1 (p/v), pendant un laps de temps compris entre 5 minutes et 1 an et à une température entre 15 °C et 129 °C,
- le traitement avec la solution de base tamponnée consiste à mettre les olives de table vertes en contact avec la solution ayant une concentration supérieure ou égale à 0,1 M, en un rapport solide/liquide supérieur ou égal à 1:1 (p/v), pendant un laps de temps compris entre 5 minutes et 1 an et à une température entre 15 °C et 129 °C et
- le traitement thermique de conservation est une stérilisation à F₀ de 15, à une température entre 117 °C et 129 °C ou le traitement thermique de conservation est une pasteurisation à 80 °C, pendant un temps entre 6 et 14 minutes.

2. Procédé selon la revendication 1, dans lequel le traitement avec la solution d'acide tamponnée a lieu avant le traitement avec le sel de zinc.

3. Procédé selon la revendication 1, dans lequel le traitement avec la solution d'acide tamponnée a lieu en même temps que le traitement avec le sel de zinc.

4. Procédé selon l'une quelconque des revendications 1 à 3, dans lequel le traitement avec la solution de base tamponnée a lieu en même temps que le traitement avec le sel de zinc.

5. Procédé selon la revendication 4, dans lequel le traitement avec la solution de base tamponnée a lieu en même temps que le traitement avec le sel de zinc et en même temps qu'un traitement thermique de stérilisation.

6. Procédé selon l'une quelconque des revendications 1 à 5, qui inclut en outre au moins l'une des étapes suivantes :
- le lavage des olives de table vertes ;
- le conditionnement dans de la saumure.

7. Procédé selon la revendication 1, dans lequel les olives de table vertes sont transformées au moyen d'un traitement alcalin et sans fermentation.

8. Procédé selon l'une quelconque des revendications 1 à 7, dans lequel les olives de table vertes transformées au moyen d'un traitement alcalin et sans fermentation sont soumises à :
- un traitement avec de la solution d'acide tamponnée d'acide lactique/NaOH de concentration supérieure ou égale à 0,1 M et pH inférieur ou égal à 5 et en un rapport solide/liquide supérieur ou égal à 1:1 et contenant du NaCl en une proportion entre 3 et 6 %, pendant un laps de temps entre 1 minute et 10 jours et à une température entre 15 °C et 90 °C ;
- un traitement avec de l'acétate de zinc pendant un laps de temps compris entre 5 minutes et 1 an et à une température entre 15 °C et 129 °C, en une concentration entre 0,05 g/l et 0,5 g/l et en un rapport solide/liquide supérieur ou égal à 1:1 (p/v) ;
- un traitement avec de la solution de base tamponnée de glycine/NaOH, de concentration supérieure ou égale à 0,1 M et pH entre 8 et 10, en un rapport solide/liquide supérieur ou égal à 1:1 (p/v) et pendant un laps de temps compris entre 5 minutes et 1 an et à une température entre 15 °C et 129 °C ;
- un lavage des olives vertes avec de l'eau pendant un laps de temps entre 3 et 24 h et avec un nombre de lavages entre 0 et 5, en fonction de la concentration de zinc utilisée dans un traitement antérieur ;
- un conditionnement dans de la saumure de NaCl de concentration entre 3 et 6 % ; et
- un traitement thermique qui est choisi parmi une stérilisation à F₀ de 15, à une température entre 117 °C et 129 °C et sur un temps entre 5 et 43 minutes ou une pasteurisation à 80 °C, pendant un temps entre 6 et 14 minutes.

9. Procédé selon la revendication 8, dans lequel :
- le traitement avec la solution d'acide tamponnée d'acide lactique/NaOH a lieu à un pH égal à 4 en un rapport solide/liquide de 1:3 (p/v), contenant du NaCl à 4 % (p/v) pendant 9 jours et à une température de 30 ° C ; et
- le traitement avec de l'acétate de zinc est effectué à une concentration de 0,1 g/l et simultanément avec le traitement avec la solution de base tamponnée, qui a lieu à un pH égal à 9,5, inclut du NaCl à 4 % et maintient une période d'équilibre de 48 h à une température de 30 °C, suivie de 43 minutes de stérilisation à 117 °C.
